# FASCICULE DE BREVET EUROPEEN

(11) **EP 2 930 531 B1**
(45) Date de publication et mention de la délivrance du brevet: **15.06.2016**
(21) Numéro de dépôt: 15162334.5
(22) Date de dépôt: 02.04.2015
(51) Int. Cl.: G01S 13/78, H01Q 25/02, H01Q 3/04, H01Q 21/28, H01Q 25/00, H01P 1/06, G01S 7/03

(54) **RADAR SECONDAIRE DE SURVEILLANCE À GRANDE CADENCE DE RAFRAÎCHISSEMENT**
SEKUNDÄRRADAR ZUR ÜBERWACHUNG MIT GROSSER REFRESH-RATE
SECONDARY SURVEILLANCE RADAR WITH HIGH REFRESH RATE

(30) Priorité: 11.04.2014 FR 1400884
(43) Date de publication de la demande: 14.10.2015
(73) Titulaire: THALES, 92400 Courbevoie (FR)
(72) Inventeur: Billaud, Philippe, 91470 Limours (FR)
(74) Mandataire: Lucas, Laurent Jacques

(56) Documents cités:
- EP-A1- 2 431 762
- FR-A1- 2 674 635
- FR-A1- 2 938 076
- JP-A- S6 288 979
- JP-A- 2007 171 037
- BALAJTI ISTVAN: "Performance of Civilian Air Traffic Control augmented by twin radars", 2013 14TH INTERNATIONAL RADAR SYMPOSIUM (IRS), IEEE, vol. 2, 19 juin 2013 (2013-06-19), pages 549-560, XP032477570, ISBN: 978-1-4673-4821-8 [extrait le 2013-08-14]

## Description

La présente invention concerne un radar secondaire de surveillance à grande cadence de rafraîchissement.

Les radars secondaires de surveillance dédiés au marché civil de l'ATC (Air Trafic Control), que l'on pourra appeler par la suite radars SSR (« Secondary Surveillance Radar »), fonctionnant essentiellement en Mode S ont pour mission d'effectuer une surveillance de l'espace aérien selon les exigences de qualité bien définies par les autorités du contrôle aérien.
Un problème technique à résoudre est l'augmentation de la cadence de rafraîchissement des positions données par un radar secondaire SSR, applicable principalement pour un radar secondaire fonctionnant en autonome mais aussi pour un radar secondaire monté avec un radar primaire.
Il y a un besoin croissant du marché civil de l'ATC pour un rafraîchissement de la position des cibles à cadence plus élevée. En effet, la précision de mesure de la position d'une cible perd de son intérêt quand l'évolution de sa trajectoire possible entre deux rafraîchissements successifs devient prépondérante. Bien sûr, c'est dans les phases délicates d'approche des aéroports que ce besoin est le plus exprimé.
Cette cadence de rafraîchissement plus élevée des informations secondaires doit être atteinte tout en satisfaisant les caractéristiques et contraintes requises par les autorités de l'ATC.
Les sous-systèmes des radars primaires PSR et des radars secondaires SSR/Mode S rafraîchissent les informations de position des cibles une fois par tour d'antenne et ne permettent pas de répondre à ce besoin sans devoir faire un compromis au détriment de la distance instrumentée et du nombre de modes différents rafraîchis à chaque tour notamment.
Une cadence suffisamment élevée peut être actuellement assurée par les systèmes de surveillance ADS-B et les systèmes de multilatération MLAT. En particulier, les systèmes ADS-B et MLAT visent un temps de rafraîchissement de position de l'ordre de la seconde.
Pour ces deux systèmes, c'est l'équipement de la cible et sa faculté à émettre des réponses périodiques non sollicitées qui sont exploités, cet équipement pouvant être un transpondeur équipé d'un GPS notamment. Il en résulte que toutes les cibles ne sont pas identiques dans leur niveau d'information. En particulier ces systèmes ne permettent pas d'extraire des données Mode S choisies par les opérateurs comme requis pour satisfaire le niveau désormais standard en ATC de Surveillance Mode S Enrichie (EnHanced mode S Surveillance _EHS) en raison de leurs limitations intrinsèques.
Un document JP 2007 171037A décrit un radar secondaire capable d'augmenter le nombre de cibles traitées. Un document JP S62 88979 décrit un procédé pour réduire la cadence de rafraichissement d'une vidéo radar.

Un but de l'invention est notamment de permettre la réalisation d'un radar ATC secondaire autonome produisant une très haute cadence de rafraîchissement des positions des cibles avec une extraction des données Mode S choisie par les opérateurs. A cet effet, l'invention a pour objet un radar secondaire comportant au moins un premier sous-système et un deuxième sous-système intégrant chacun des moyens d'émission des interrogations, de réception et de traitement de signaux en réponse réalisant une fonction radar de surveillance SSR, le deuxième sous-système étant apte à fonctionner en redondance du premier sous-système, les deux sous-systèmes réalisant simultanément ladite fonction radar de surveillance, ledit radar secondaire comportant :
- une première antenne, apte à être mue en rotation, couplée au premier sous-système via un joint tournant et une deuxième antenne couplée au deuxième sous-système via ledit joint tournant, les plans principaux desdites antennes étant solidaire mécaniquement et montées dos à dos, un élément rayonnant arrière constitutif de la première antenne étant placé dans le plan de la deuxième antenne et un élément rayonnant constitutif de la deuxième antenne étant placé dans le plan de la première antenne ;
- des moyens de diffusion des données extraites des deux sous-systèmes, les données extraites de chaque sous-système étant rafraîchies à chaque tour d'antenne.

Le radar secondaire comporte par exemple des moyens de combinaison de pistes extraites des deux sous-systèmes, lesdits moyens de combinaison transmettant les pistes combinées aux moyens de diffusion.
Les moyens d'émission, de réception et d'extraction de chaque sous-système diffusent par exemple leurs plots au pistage associé ainsi qu'à celui de l'autre sous-système.
Les deux sous-systèmes s'échangent, par exemple dans chaque tour d'antenne, les plots SSR/Mode S et les informations obtenues avec les cibles mode S et les numéros des pistes créés dans ce tour pour assurer une parfaite similitude entre les deux sous-systèmes.
Dans un mode de réalisation possible, chacune des deux antennes comporte trois voies, une voie somme (∑), une voie différence (Δ) et une voie de contrôle (Ω), la voie de contrôle étant partiellement affectée à l'élément rayonnant arrière , les signaux issus desdites voies étant transférés vers les moyens d'émission et de réception desdits sous-ensembles via le joint tournant.
Dans un autre mode de réalisation possible, chacune des deux antennes comporte deux voies, une voie somme (∑), et une voie différence et contrôle (Δ/Ω), la voie différence et contrôle étant partiellement affectée à l'élément rayonnant arrière, les signaux issus desdites voies étant transférés vers les moyens d'émission et de réception desdits sous-ensembles via le joint tournant.
Dans un mode de réalisation possible, les antennes sont du type LVA, à large ouverture verticale. Dans un autre mode de réalisation possible, les antennes sont du type poutre.
Le radar comporte par exemple un plan de masse et/ou un absorbant hyperfréquence séparant les deux antennes, l'isolation entre les deux antennes, étant accrue par ledit plan de masse et/ou ledit absorbant hyperfréquence.
Les séquences d'interrogation des deux sous-systèmes sont par exemple identiques et sont synchronisées de telle manière que les moments d'interrogation de chacune des deux sous-systèmes soient temporellement décalés. Les séquences d'interrogation comportant des périodes « All Call » suivie de périodes « Roll Call », les périodes d'interrogation « Roll Call » d'un sous-système débutent par exemple sensiblement à mi-période des périodes d'interrogation « Roll Call » de l'autre sous-système.

D'autres caractéristiques et avantages de l'invention apparaîtront à l'aide de la description qui suit, faite en regard de dessins annexés qui représentent :
- la figure1, un exemple d'architecture d'un radar SSR selon l'art antérieur ;
- la figure 2, un exemple d'architecture d'un radar SSR selon l'invention ;
- la figure 3, un autre exemple de réalisation d'un radar SSR selon l'invention ;
- la figure 4, un exemple de réalisation d'un système d'antennes d'un radar SSR selon l'invention ;
- la figure 5, un autre exemple de réalisation d'un système d'antennes d'un radar SSR selon l'invention.

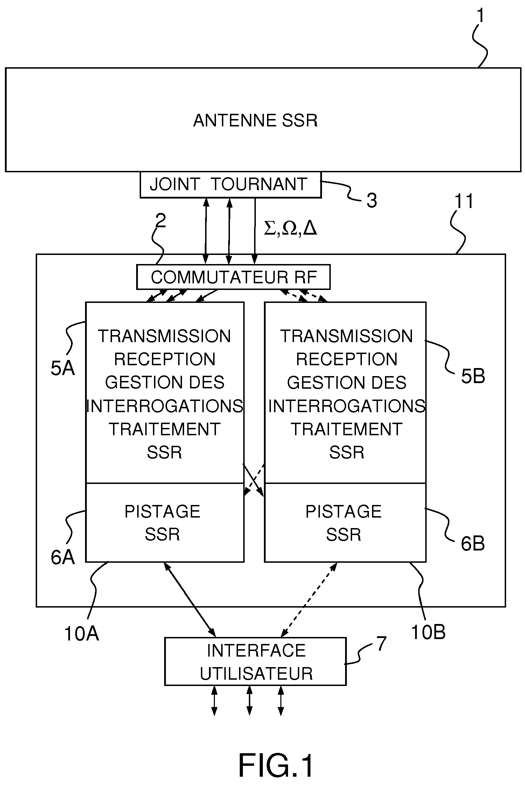

La figure 1 présente un exemple d'architecture d'un radar SSR autonome, selon l'art antérieur. Il existe deux architectures ATC classiques de radar secondaire. Dans une première configuration, le radar SSR est monté sur une même structure avec un radar primaire, partageant l'ensemble des ressources de fonctionnement. Dans une deuxième configuration, le radar SSR est autonome, monté seul.
Ces deux architectures ATC classiques comportent un même système SSR/Mode S 11, basé sur deux sous-systèmes 10A, 10B aux structures identiques. Ces deux sous-systèmes sont exploités en redondance passive. Un sous-système 10A est connecté sur l'antenne 1, via un commutateur hyperfréquence 2 et un joint tournant 3, alors que le second sous-système 10B reçoit les plots du premier 10A, qui est actif, pour maintenir à jour son pistage, dans le seul but de réduire le temps de perte de service lors d'une commutation d'un sous-système à l'autre, en cas de défaillance ou d'acte de maintenance du premier. La position des cibles est rafraîchie une fois par tour d'antenne.
L'antenne 2, que l'on appellera par la suite antenne SSR, est une antenne à large ouverture verticale, dite LVA, qui est compatible avec les fonctions ATC de surveillance SSR mais aussi avec des fonctions d'identification IFF. Elle assure le rayonnement des interrogations SSR/Mode S et la captation des réponses issues des transpondeurs des aéronefs.
Le joint tournant 3 possède trois galettes RF pour les trois voies de la bande L du radar SSR : la voie somme ∑, la voie différence Δ et la voie de contrôle Ω, que l'on évoquera par la suite.
Le traitement secondaire SSR est localisé dans une cabine 11 incluant les sous-systèmes redondés 10A, 10B. Le commutateur hyperfréquence 2 commutant l'une ou l'autre de ces fonctions sur l'antenne est par exemple situé dans cette cabine 11.
Chaque sous-système SSR, redondé, comporte une unité 5A, 5B d'élaboration et d'émission des interrogations, de réception des réponses, de traitement du signal et d'extraction des plots SSR/Mode S et une unité 6A, 6B de pistage. La première unité 5A, 5B comporte notamment :
- Un générateur élaborant les interrogations SSR/Mode S en fonction des tâches à effectuer avec les cibles prédites présentes dans le lobe principal de l'antenne SSR ;
- Un émetteur qui convertit en signaux RF de forte puissance les interrogations à rayonner par l'antenne ;
- Un récepteur qui démodule les signaux RF reçus par l'antenne ;
- Un traitement du signal opérant sur les réponses reçues dans le lobe principal de l'antenne ;
- Un extracteur qui constitue un plot à partir des détections élémentaires (réponses).
La deuxième unité 6A, 6B comporte notamment :
- Une fonction d'association et de pistage des plots secondaire SSR;
- Une gestion des déports et de la supervision notamment.
Les sorties des unités 6A, 6B sont reliées via des interfaces 7 à des moyens de visualisation et/ou de commande ou contrôle et/ou de déport des pistes SSR pour les utilisateurs.

La redondance est donc caractérisée par le fait qu'entre les canaux A et B, l'un est considéré comme maître et l'autre comme esclave, les deux rôles étant parfaitement interchangeables.
La redondance passive est caractérisée dans une structure redondante par le fait que, seul, un des canaux (le maître) est activé.

A un instant donné, tel que représenté sur la figure 1 où le canal A est maître et le canal B esclave, seul le sous-système SSR/Mode S maître, le sous-système 10A, est relié à l'antenne SSR via le commutateur hyperfréquence 2. Il émet des interrogations et traite les réponses. L'extracteur du canal maître 10A diffuse les plots extraits vers le canal esclave 10B pour mise à jour de son pistage. Les fonctions d'émission, de réception et d'extraction du canal esclave 10B sont désactivées, le canal esclave n'étant actif que pour la mise à jour de son pistage. Dans cette redondance passive, le canal esclave devient actif en prenant le relais du canal maître 10A si ce dernier devient défaillant.
L'antenne SSR, du type LVA, a par exemple une envergure de l'ordre de neuf mètres pour une hauteur de l'ordre d'un mètre. Il est possible d'utiliser d'autres types d'antennes, notamment de taille plus réduite, de type poutre ou LVA dans la gamme d'envergure de 4 mètres par exemple.

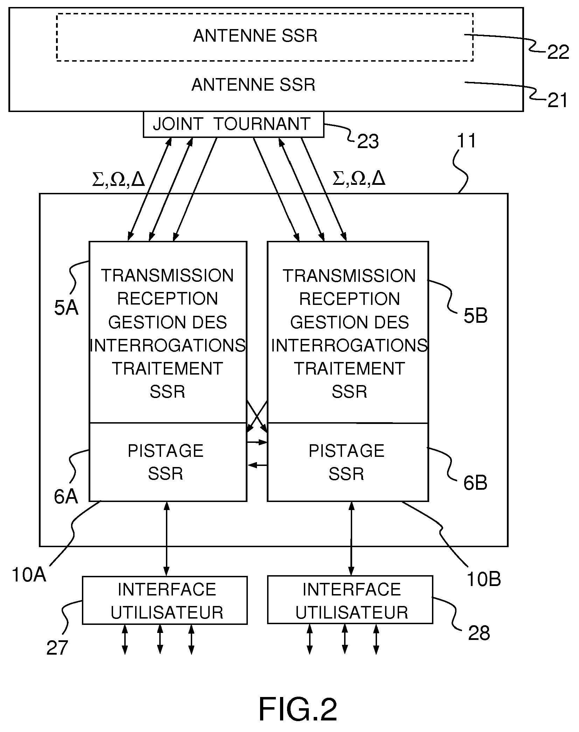

La figure 2 présente un exemple de réalisation d'un radar SSR selon l'invention. Dans cet exemple de réalisation, le radar utilise le système SSR disponible dans la cabine 11 tel que décrit dans le radar de la figure 1. Plus particulièrement, le radar secondaire selon l'invention exploite simultanément les deux sous-systèmes 10A, 10B, réalisant une redondance active. Chaque sous-système 10A, 10B est ainsi exploité de façon active, c'est-à-dire que les unités 5A, 6A, 5B, 6B des deux sous-systèmes réalisent simultanément des émissions, réceptions et extractions SSR et des pistages SSR.
Une première antenne SSR 21 est couplée au premier sous-système 10A et une deuxième antenne SSR 22 est couplée au deuxième sous-système 10B, via un joint tournant 23. Les deux antennes 21, 22 sont montées dos à dos.

Pour permettre le fonctionnement simultané des deux sous-systèmes SSR, les quelques adaptations suivantes doivent être réalisées :
- Le joint tournant comporte trois galettes RF supplémentaires dans la bande L afin que l'ensemble permette le passage des voies ∑, Δ, Ω entre la première antenne 21 et le premier sous-système 10A et entre la deuxième antenne 22 et le deuxième sous-système 10B ;
- Le commutateur hyperfréquence est supprimé en raison du fonctionnement simultané des deux sous-systèmes ;
- Les extracteurs des deux sous-systèmes :
   - Forment les plots de leur canal ;
   - Diffusent leur plots au pistage de leur sous-système à chaque tour d'antenne ;
   - Diffusent leur plots au pistage de l'autre sous-système à chaque tour d'antenne ;
   - Diffusent par exemple le numéro des nouvelles pistes pour assurer le même numéro de piste entre deux sous-systèmes pour que les deux sous-systèmes soient vus comme un unique dispositif fonctionnel ;
   - Diffusent les pistes aux utilisateurs via les déports usuels.

Dans un premier mode de réalisation possible, chaque sous-système assure la diffusion de ses plots extraits, le rafraîchissement étant réalisé à la vitesse de rotation du système antennaire, via une interface utilisateur 27, 28 comme illustré par la figure 2, la sortie de chaque interface utilisateur étant décalée d'un demi-tour d'antenne par rapport à l'autre interface utilisateur.

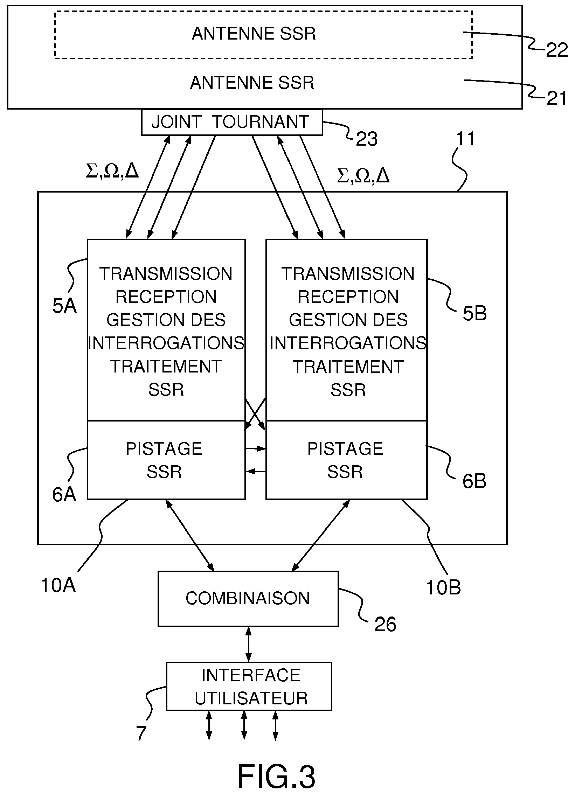

Dans un autre mode de réalisation, illustré par la figure 3, les sous-systèmes 10A et 10B transmettent les pistes issues du pistage 6A, respectivement les pistes issues du pistage 6B, à un dispositif 26 qui assure la combinaison des pistes et les diffuse à une cadence de rafraîchissement égale à deux fois la vitesse de rotation du système antennaire, via une interface utilisateur 7.
Dans les deux cas, la position des cibles est rafraîchie deux fois par tour d'antenne, conduisant ainsi à une cadence de rafraîchissement doublée tout en respectant les contraintes requises par l'ATC.

En cas de défaillance d'un sous-système, le radar continue à fonctionner en rafraîchissant les pistes à la vitesse de rotation du système antennaire tant que le sous-système défaillant n'est pas réparé. Si l'on n'accepte pas ce temps de fonctionnement dégradé et que l'on souhaite garantir en permanence une cadence de rafraîchissement égale à deux fois la vitesse de rotation du système antennaire en cas de panne, on peut doubler le système (11).

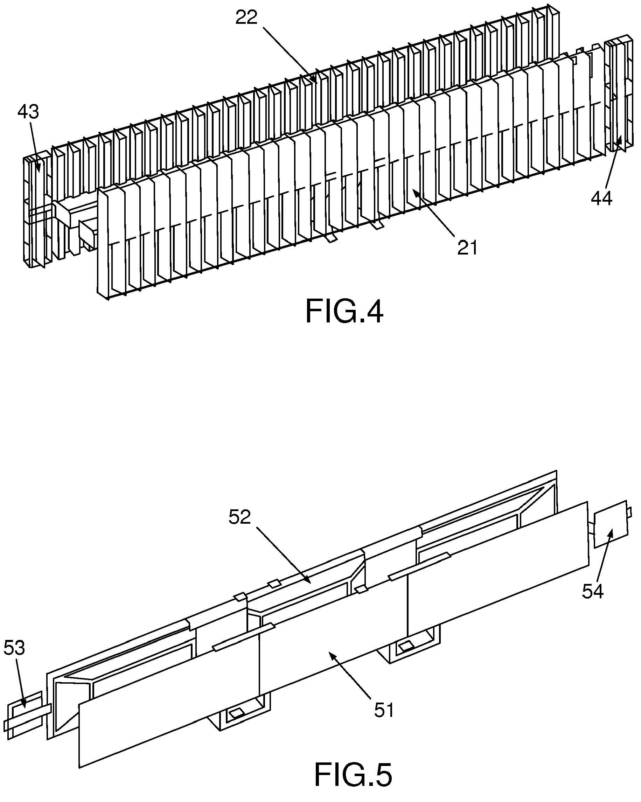

La figure 4 illustre un exemple de réalisation d'un système antennaire d'un radar secondaire selon l'invention. Le système antennaire est composé des deux antennes secondaires 21, 22 montées dos à dos, c'est-à-dire que leurs lobes principaux sont pointés dans des directions opposées. Les deux antennes sont identiques, un but étant d'avoir le même comportement et les mêmes performances pour les deux sous-systèmes. Dans l'exemple de la figure 4, chaque antenne est composée d'un réseau de barres rayonnantes. Une barre 43, un élément rayonnant, constitutive de la première antenne 21 est disposée dans le plan frontal de la deuxième antenne 22. Cet élément rayonnant 43, situé à l'arrière du panneau principal de l'antenne 21, permet d'effectuer une fonction de contrôle, notamment en ce qui concerne la situation géographique des transpondeurs captés. De même, une barre rayonnante 44, constitutive de la deuxième antenne 22 est disposée dans le plan frontal de la première antenne 21, permettant également d'effectuer une fonction de contrôle.
Les antennes de la figure 4, du type LVA, ont une envergure importante. Cette envergure est par exemple de l'ordre de 9 mètres, pour une hauteur de 1 mètre. Elles peuvent donc être utilisées pour des applications de longue portée.
Pour des applications de moyenne portée, on peut utiliser des antennes ayant la même structure LVA ou du type poutre, mais avec une envergure moindre, par exemple de l'ordre de 4 mètres. Dans cette configuration à envergure réduite, le système antennaire peut tourner intrinsèquement plus rapidement augmentant encore d'un cran la cadence de rafraîchissement qu'apporte la redondance active.
Les antennes comportent par exemple chacune :
- Une voie somme ∑, pour la détection ;
- Une voie différence Δ, pour la fonction monopulse ;
- Une voie de contrôle Ω pour la fonction de blocage, transmise pour partie par les éléments rayonnant arrières 43, 44, des antennes secondaires.

Les signaux de ces trois voies de chaque antenne sont transmis via le joint tournant 23 respectivement aux sous-systèmes SSR 10A, 10B. Avantageusement, chacune des antennes 21, 22 peut comporter indépendamment :
- Soit trois voies, une vois somme ∑, une voie différence Δ et une voie de contrôle Ω, la voie de contrôle étant affectée pour partie à l'élément rayonnant arrière 43, 44 ;
- Soit deux voies, une voie somme ∑ et une voie différence/contrôle Δ/Ω, la voie Δ/Ω étant affectée pour partie à l'élément rayonnant arrière 43, 44 ;
les signaux issus desdites voies étant transférés vers les moyens d'émission et de réception respectivement des sous-systèmes 10A, 10B via le joint tournant 23.

La figure 5 illustre un autre mode de réalisation possible d'un système antennaire d'un radar SSR selon l'invention. Dans ce mode de réalisation, le système antennaire est composé de deux antennes 51,52 de type poutre montées dos à dos, ayant par exemple une envergure de l'ordre de 4 mètres. Un tel système antennaire peut être utilisé pour un radar transportable de moyenne portée.
Une pièce rayonnante 53, constitutive de la première antenne est disposée dans le plan frontal de la deuxième antenne 52, cet élément rayonnant 53, situé à l'arrière du faisceau principal de l'antenne, permet d'effectuer une fonction de contrôle comme décrit précédemment. De même, pour les mêmes raisons, une pièce rayonnante 54, constitutive de la deuxième antenne, est située dans le plan frontal de la première antenne. Sur la figure, les pièces 53, 54 sont disposées en extrémité des antennes mais elles peuvent être disposées en un autre endroit, par exemple au dessus au centre.

Le fonctionnement simultané des deux sous-systèmes 10A, 10B entraîne :
- Un couplage hyperfréquence entre les deux sous-systèmes ;
- Un blocage des transpondeurs au niveau des avions.

Pour éviter le couplage hyperfréquence entre les deux sous-systèmes fonctionnant en simultané (appelé mode duplex) et donc annuler la pollution des interrogations effectuées par un sous-système pendant les périodes d'écoute en réception de l'autre sous-système, un radar selon l'invention comporte par exemple un filtre additionnel dans chaque chaîne de réception, cela étant appliqué pour chaque voie ∑, Δ, Ω. Le filtre est par exemple inséré entre le joint tournant 23 et le récepteur de chaque voie. Si les voies d'émission et de réception sont séparées par un circulateur, le filtre est placé à l'entrée de la voie de réception, en sortie du circulateur. En pratique, pour une interrogation à 1030 MHz on ajoute un filtre réjecteur à 1030 MHz dans la chaîne de réception à 1090 MHz.

Le montage dos à dos des antennes peut provoquer un blocage des transpondeurs, cela étant dû notamment à la fuite arrière d'une antenne qui se superpose au lobe principal de l'autre antenne. En effet, le comportement des transpondeurs est tel que les avions présents dans l'espace aérien situés au dos d'une antenne reçoivent les interrogations SSR ou Mode S par les fuites de la voie somme ∑ mais n'y répondent pas car ils sont bloqués (durée appelée « temps mort ») grâce à l'ISLS émis respectivement par la face rayonnante 21, 22 pour les cibles frontales en dehors du lobe principal et les barres 43, 44 pour les cibles vues par l'arrière :
- suite à la réception d'une impulsion P2 sur la voie Ω pour une interrogation SSR inférieure à 35 µs à ± 10 µs ;
- suite à la réception d'une impulsion P5 sur la voie Ω pour une interrogation Mode S inférieure à 45 µs.

En conséquence, si une interrogation SSR ou Mode S est émise dans cet intervalle « temps mort » par l'autre antenne en direction de la cible, celle-ci n'est pas prise en compte par les transpondeurs des avions, en raison du blocage effectué via la voie Ω. Par la suite, pour toutes ces cibles ayant interprété l'impulsion ISLS, donc à courte portée, il y a manque de réponse sur la récurrence concernée.
Le champ rayonné par fuite au dos d'une antenne est en niveau absolu, assez faible, souvent de l'ordre de 30 à 40 dB inférieur au champ rayonné maximal dans l'axe principal de l'antenne. En conséquence, seules les cibles très proches du radar peuvent potentiellement donner lieu à un blocage et ce au cas où les interrogations des 2 radars secondaires SSR seraient espacées de moins de 45 µs.
Pour éviter que ce phénomène ne perturbe la détection de l'antenne opposée, montée au dos, les deux sous-systèmes 10A, 10B sont synchronisés de telle manière que leurs périodes d'interrogations soient décalées d'un espace temporel donné suffisant.

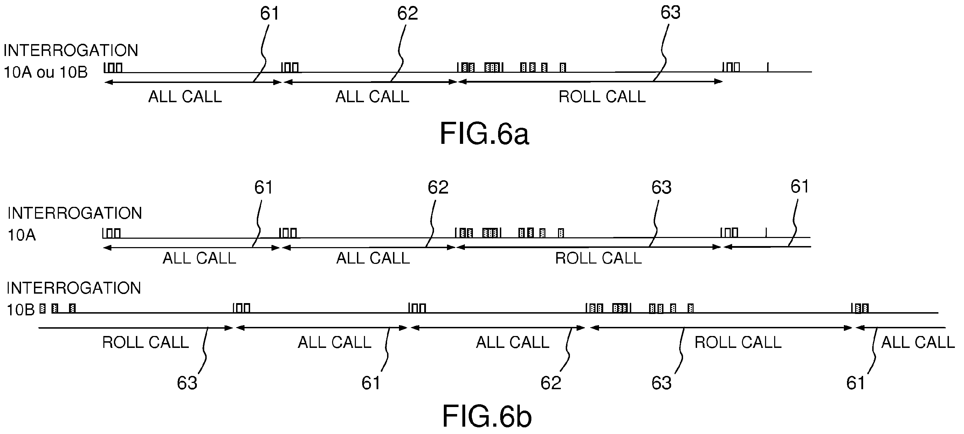

Le fonctionnement séquentiel d'un radar secondaire classique Mode S est illustré par la figure 6a :
- deux périodes 61, 62 dites « All Call », pour l'appel général des avions, comportant chacune une interrogation d'appel général Mode S, donc non sélective, et une interrogation en mode SSR suivies des réponses Mode S et SSR transmises par les transpondeurs des avions en retour;
- une période 63 dites « Roll Call », pour la surveillance sélective des avions, comportant usuellement pour chaque avion équipé de transpondeur Mode S, les interrogations Mode S sélectives en début de période pour provoquer les réponses Mode S en cours/fin de période.

Le synchronisme entre les deux sous-systèmes est illustré par la figure 6b. Les mêmes séquences de périodes d'interrogations « All Call » et « Roll Call » sont appliquées à chaque sous-système, selon l'ordonnancement illustré par la figure 6a. Les deux sous-systèmes sont synchronisés à l'émission en provoquant un décalage entre les périodes « Roll Call » 63. Ce décalage est tel que les périodes « Roll Call » du deuxième sous-système débutent de l'ordre de la mi-période des périodes « Roll Call » du premier sous-système.
Cette synchronisation illustrée par la figure 6b permet avantageusement d'espacer avec certitude toutes les interrogations entre les deux sous-systèmes 10A, 10B tout en conservant la possibilité d'obtenir une vobulation de la fréquence de répétition des interrogations, pour éviter les synchronismes avec d'autres radars.

L'invention a été présentée pour un radar secondaire autonome, elle peut bien sûr s'appliquer pour un radar secondaire monté avec un radar primaire. Dans ce cas, le renouvellement des positions de cibles secondaires s'effectuera 2 fois par tour : une fois en PSR+SSR et à l'opposé en SSR seul.

## Revendications

1. Radar secondaire comportant au moins un premier sous-système (10A) et un deuxième sous-système (10B) intégrant chacun des moyens d'émission des interrogations, de réception et de traitement de signaux en réponse réalisant une fonction radar de surveillance SSR, le deuxième sous-système (10B) étant apte à fonctionner en redondance du premier sous-système (10A), les deux sous-systèmes réalisant simultanément ladite fonction radar de surveillance, ledit radar secondaire comportant :
- une première antenne (21,43, 51,53), apte à être mue en rotation, couplée au premier sous-système (10A) via un joint tournant (23) et une deuxième antenne (22, 44, 52, 54) couplée au deuxième sous-système (10B) via ledit joint tournant, les plans principaux desdites antennes étant solidaire mécaniquement et montées dos à dos,
- des moyens de diffusion (7, 27, 28) des données extraites des deux sous-systèmes, les données extraites de chaque sous-système étant rafraîchies à chaque tour d'antenne,
**caractérisé en ce qu'** un élément rayonnant arrière (43, 53) constitutif de la première antenne (21, 51) étant placé dans le plan de la deuxième antenne (22, 52) et un élément rayonnant (44, 54) constitutif de la deuxième antenne (22, 52) étant placé dans le plan de la première antenne (21, 51), les deux sous-systèmes (10A, 10B) s'échangeant dans chaque tour d'antenne les plots SSR/Mode S et les informations obtenues avec les cibles mode S et les numéros des pistes créés dans ce tour pour assurer une parfaite similitude entre les deux sous-systèmes.

2. Radar secondaire selon la revendication 1, **caractérisé en ce qu'**il comporte des moyens (26) de combinaison de pistes extraites des deux sous-systèmes (10A, 10B), lesdits moyens de combinaison (26) transmettant les pistes combinées aux moyens de diffusion (7).

3. Radar secondaire selon l'une quelconque des revendications précédentes, **caractérisé en ce que** les moyens d'émission, de réception et d'extraction (5A, 5B) de chaque sous-système (10A, 10B) diffusent leurs plots au pistage associé (6A, 6B) ainsi qu'à celui (6B, 6A) de l'autre sous-système (10B, 10A).

4. Radar secondaire selon l'une quelconque des revendications précédentes, **caractérisé en ce que** chacune des deux antennes (21, 22, 43, 44, 51, 52, 53, 54) comporte trois voies, une voie somme (∑), une voie différence (Δ) et une voie de contrôle (Ω), la voie de contrôle étant partiellement affectée à l'élément rayonnant arrière (43, 44, 53, 54), les signaux issus desdites voies étant transférés vers les moyens d'émission et de réception desdits sous-ensembles via le joint tournant (23).

5. Radar secondaire selon l'une quelconque des revendications 1 à 3, **caractérisé en ce que** chacune des deux antennes (21, 22, 43, 44, 51, 52, 53, 54) comporte deux voies, une voie somme (∑), et une voie différence et contrôle (Δ/Ω), la voie différence et contrôle étant partiellement affectée à l'élément rayonnant arrière (43, 44, 53, 54), les signaux issus desdites voies étant transférés vers les moyens d'émission et de réception desdits sous-ensembles via le joint tournant (23).

6. Radar secondaire selon l'une quelconque des revendications précédentes **caractérisé en ce que** les antennes sont du type LVA, à large ouverture verticale.

7. Radar secondaire selon l'une quelconque des revendications 1 à 5, **caractérisé en ce que** les antennes sont du type poutre.

8. Radar secondaire selon l'une quelconque des revendications précédentes, **caractérisé en ce qu'**il comporte un plan de masse et/ou un absorbant hyperfréquence séparant les deux antennes (21, 22, 51, 52), l'isolation entre les deux antennes (21, 22, 51, 52) étant accrue par ledit plan de masse et/ou ledit absorbant hyperfréquence.

9. Radar secondaire selon l'une quelconque des revendications précédentes, **caractérisé en ce que** les séquences d'interrogation (61, 62, 63) des deux sous-systèmes sont identiques et sont synchronisées de telle manière que les moments d'interrogation de chacune des deux sous-systèmes soient temporellement décalées.

10. Radar selon la revendication 9, **caractérisé en ce que**, les séquences d'interrogation comportant des périodes « All Call » suivie de périodes « Roll Call », les périodes d'interrogation « Roll Call » (63) d'un sous-système débutent sensiblement à mi-période des périodes d'interrogation « Roll Call » (63) de l'autre sous-système.

## Patentansprüche

1. Sekundärradar, das wenigstens ein erstes Subsystem (10A) und ein zweites Subsystem (10B) umfasst, die jeweils Mittel zum Senden von Abfragen, zum Empfangen und zum Verarbeiten von Signalen beinhalten und als Reaktion darauf eine Überwachungsradarfunktion SSR ausführen, wobei das zweite Subsystem (10B) in Redundanz zu dem ersten Subsystem (10A) arbeiten kann, wobei die beiden Subsysteme gleichzeitig die Überwachungsradarfunktion ausführen, wobei das Sekundärradar Folgendes umfasst:
- eine erste Antenne (21, 43, 51, 53), die gekoppelt mit dem ersten Subsystem (10A) über ein Drehgelenk (23) in Drehung versetzt werden kann, und eine zweite Antenne (22, 44, 52, 54), die über das Drehgelenk mit dem zweiten Subsystem (10B) gekoppelt ist, wobei die Hauptebenen der Antennen mechanisch fest und Rücken an Rücken montiert sind,
- Mittel (7, 27, 28) zum Verteilen von Daten, die von den beiden Subsystemen extrahiert wurden, wobei die von jedem Subsystem extrahierten Daten bei jeder Umdrehung einer Antenne aufgefrischt werden,
**dadurch gekennzeichnet, dass** ein hinteres Strahlungselement (43, 53) das einen Bestandteil der ersten Antenne (21, 51) darstellt in der Ebene der zweiten Antenne (22, 52) platziert ist und ein Strahlungselement (44, 54) das einen Bestandteil der zweiten Antenne (22, 52) darstellt in der Ebene der ersten Antenne (21, 51) platziert ist, wobei die beiden Subsysteme (10A, 10B) bei jeder Umdrehung der Antenne die SSR/Mode S Kontaktstellen und die mit den Mode S Zielen erhaltenen Informationen und den Anzahlen von erzeugten Spuren bei dieser Umdrehung austauschen, um eine perfekte Ähnlichkeit zwischen den beiden Subsystemen zu gewährleisten.

2. Sekundärradar nach Anspruch 1, **dadurch gekennzeichnet, dass** es Mittel (26) zum Kombinieren von von den beiden Subsystemen (10A, 10B) extrahierten Spuren umfasst, wobei die Kombinationsmittel (26) die kombinierten Spuren zu den Verteilungsmitteln (7) übertragen.

3. Sekundärradar nach einem der vorherigen Ansprüche, **dadurch gekennzeichnet, dass** die Sende-, Empfangs- und Extraktionsmittel (5A, 5B) jedes Subsystems (10A, 10B) ihre Kontaktstellen auf die assoziierte Spur (6A, 6B) wie auch auf die (6B, 6A) des anderen Subsystems (10B, 10A) verteilen.

4. Sekundärradar nach einem der vorherigen Ansprüche, **dadurch gekennzeichnet, dass** jede der beiden Antennen (21, 22, 43, 44, 51, 52, 53, 54) drei Kanäle aufweist, einen Summenkanal (∑), einen Differenzkanal (Δ) und einen Kontrollkanal (Ω), wobei der Kontrollkanal teilweise dem hinteren Strahlungselement (43, 44, 53, 54) zugeordnet ist, wobei die Signale von den Kanälen zu den Sende- und Empfangsmitteln der Subbaugruppen über das Drehgelenk (23) übertragen werden.

5. Sekundärradar nach einem der Ansprüche 1 bis 3, **dadurch gekennzeichnet, dass** jede der beiden Antennen (21, 22, 43, 44, 51, 52, 53, 54) zwei Kanäle umfasst, einen Summenkanal (Δ) und einen Differenz- und Kontrollkanal (Δ/Ω), wobei der Differenzund Kontrollkanal teilweise dem hinteren Strahlungselement (43, 44, 53, 54) zugeordnet ist, wobei die Signale von den Kanälen zu den Sende- und Empfangsmitteln der Subbaugruppen über das Drehgelenk (23) übertragen werden.

6. Sekundärradar nach einem der vorherigen Ansprüche, **dadurch gekennzeichnet, dass** die Antennen vom LVA-Typ mit großer vertikaler Öffnung sind.

7. Sekundärradar nach einem der Ansprüche 1 bis 5, **dadurch gekennzeichnet, dass** die Antennen vom Balkentyp sind.

8. Sekundärradar nach einem der vorherigen Ansprüche, **dadurch gekennzeichnet, dass** es eine Masseebene und/oder eine Mikrowellenabsorptionskomponente umfasst, die die beiden Antennen (21, 22, 51, 52) voneinander trennt, wobei die Trennung zwischen den beiden Antennen (21, 22, 51, 52) durch die Masseebene und/oder die Mikrowellenabsorptionskomponente erhöht wird.

9. Sekundärradar nach einem der vorherigen Ansprüche, **dadurch gekennzeichnet, dass** die Abfragesequenzen (61, 62, 63) der beiden Subsysteme identisch und auf eine solche Weise synchronisiert sind, dass die Abfragezeitpunkte jedes der beiden Subsysteme zeitlich versetzt sind.

10. Radar nach Anspruch 9, **dadurch gekennzeichnet, dass** die Abfragesequenzen "All Call" Perioden, gefolgt von "Roll Call" Perioden umfassen, wobei die "Roll Call" Abfrageperioden (63) eines Subsystems im Wesentlichen in der Mitte der "Roll Call" Abfrageperioden (23) des anderen Subsystems beginnen.

## Claims

1. Secondary radar comprising at least a first sub-system (10A) and a second subsystem (10B) which each include transmission means for the interrogations, for receiving and processing signals in response carrying out a radar surveillance function SSR, the second sub-system (10B) being capable of operating during redundancy of the first sub-system (10A), the two sub-systems simultaneously carrying out the radar surveillance function, the secondary radar comprising:
- a first antenna (21, 43, 51, 53) which is capable of being moved in rotation and which is coupled to the first sub-system (10A) via a rotating joint (23) and a second antenna (22, 44, 52, 54) which is coupled to the second sub-system (10B) via the rotating joint, the main planes of the antennae being fixedly joined mechanically and mounted back-to-back,
- distribution means (7, 27, 28) for the data extracted from the two subsystems, the data extracted from each sub-system being refreshed with each revolution of the antenna,
**characterised in that** a rear radiating element (43, 53) which constitutes the first antenna (21, 51) being placed in the plane of the second antenna (22, 52) and a radiating element (44, 54) which constitutes the second antenna (22, 52) being placed in the plane of the first antenna (21, 51), the two sub-systems (10A, 10B) exchanging with each revolution of the antenna the plots SSR/Mode S and the information obtained with the mode S targets and the track numbers created during this revolution in order to ensure complete similarity between the two sub-systems.

2. Secondary radar according to claim 1, **characterised in that** it comprises combination means (26) for tracks extracted from the two sub-systems (10A, 10B), the combination means (26) transmitting the combined tracks to the distribution means (7).

3. Secondary radar according to either of the preceding claims, **characterised in that** the transmitting, receiving and extraction means (5A, 5B) of each sub-system (10A, 10B) distribute their plots to the associated tracking system (6A, 6B) and to the system (6B, 6A) of the other sub-system (10B, 10A).

4. Secondary radar according to any one of the preceding claims, **characterised in that** each of the two antennae (21, 22, 43, 44, 51, 52, 53, 54) comprises three channels, a sum channel (∑), a difference channel (Δ) and a control channel (Ω), the control channel being partially assigned to the rear radiating element (43, 44, 53, 54), the signals originating from the channels being transferred to the transmitting and receiving means of the sub-assemblies via the rotating joint (23).

5. Secondary radar according to any one of claims 1 to 3, **characterised in that** each of the two antennae (21, 22, 43, 44, 51, 52, 53, 54) comprises two channels, a sum channel (∑) and a difference and control channel (Δ/Ω), the difference and control channel being partially assigned to the rear radiating element (43, 44, 53, 54), the signals originating from the channels being transferred to the transmitting and receiving means of the sub-assemblies via the rotating joint (23).

6. Secondary radar according to any one of the preceding claims, **characterised in that** the antennae are of the type LVA, with a large vertical aperture.

7. Secondary radar according to any one of claims 1 to 5, **characterised in that** the antennae are of the beam type.

8. Secondary radar according to any one of the preceding claims, **characterised in that** it comprises a ground plane and/or a hyperfrequency absorbent which separates the two antennae (21, 22, 51, 52), the insulation between the two antennae (21, 22, 51, 52) being increased by the ground plane and/or the hyperfrequency absorbent.

9. Secondary radar according to any one of the preceding claims, **characterised in that** the interrogation sequences (61, 62, 63) of the two sub-systems are identical and are synchronised in such a manner that the interrogation times of each of the two sub-systems are temporally offset.

10. Radar according to claim 9, **characterised in that** the interrogation sequences comprising periods "All Call" followed by periods "Roll Call", the interrogation periods "Roll Call" (63) of a sub-system start substantially at the mid-period of the interrogation periods "Roll Call" (63) of the other sub-system.
